# EUROPEAN PATENT SPECIFICATION

(11) **EP 3 023 600 B1**
(45) Date of publication and mention of the grant of the patent: **03.01.2018**
(21) Application number: 14194481.9
(22) Date of filing: 24.11.2014
(51) Int. Cl.: F01D 11/24

(54) **ENGINE CASING ELEMENT**
MOTORGEHÄUSEELEMENT
ÉLÉMENT DE CARTER DE MOTEUR

(43) Date of publication of application: 25.05.2016
(73) Proprietor: Ansaldo Energia IP UK Limited, London W1G 9DQ (GB)
(72) Inventor: Richter, Johannes, 8953 Dietikon (CH); Cataldi, Giovanni, 8004 Zürich (CH); Wiedemann, Nikolas, 5442 Fislisbach (CH); Simon-Delgado, Carlos, 5400 Baden (CH)
(74) Representative: Bernotti, Andrea

(56) References cited:
- EP-A1- 2 180 148
- EP-A2- 1 965 030
- CH-A2- 707 767
- GB-A- 1 524 956
- GB-A- 1 605 255
- JP-B2- 5 439 597

## Description

### TECHNICAL FIELD OF INVENTION

The present disclosure related to the field of engine casing elements as described in the preamble of claim 1.

In certain embodiments it relates to casing elements for turboengine casings. Such turboengines may comprise, non-limiting, turbo compressors, expansion turbines including steam turbines, turbochargers and gas turbine engines, said gas turbine engines comprising at least one turbocompressor and at least one turbine. Such gas turbine engines may for instance be provided as power generation gas turbines driving a generator, for automotive drive, for aircraft propulsion, and for other applications where mechanical drive is required. Gas turbine engines may comprise one or more turbines and/or compressors wherein typically at least one turbine and one compressor may be drivingly connected to each other, and one turbine may or may not be coupled, directly or via a gear set, to a device requiring mechanical drive. Such gas turbine engines are well known in the art. The brief summary provided above may not be considered as comprehensive and is provided as an exemplary reference only.

The disclosure further provides devices applicable for engine clearance control. Such clearances to be controlled may typically be found between rotating blades and stationary parts or between stationary vanes and rotating parts of turboengines. For instance the clearance present at the shrouded or non-shrouded tips of turboengine vanes or blades may be controlled such as to minimize working fluid loss over the blade or vane tips, while maintaining a minimum clearance to avoid mechanical contact between rotating and stationary engine components. Further said devices may for instance be applied at last, that is most downstream, stages of a multistage turbocompressor and/or first, that is most upstream, stages of a multistage turbine.

### BACKGROUND OF INVENTION

In sections of engines where moving and stationary engine parts meet and perform relative movement, whereas a pressure differential is found across the contact area of stationary and moving engine components, a leakage flow of working fluid may result which in turn might lower the engine efficiency. This is in particular true in turboengines over a blade or vane ring. Typically, no tight sealing can be applied, due to the high relative velocity of stationary and moving parts and moreover by virtue of the potentially high temperatures inherent in the process. A minimum gap thus needs to be maintained between the tips of blades and vanes and the juxtaposed relatively moving components. As various components of the engine will have different thermal expansion and will moreover expand - or contract - with different time behavior upon a change of the operation parameters, the clearance needs to be adapted to worst case conditions, whereas the clearance in other operational states then exceeds the minimum clearance required, resulting in a performance degradation. While said performance degradation may be reduced by sealing systems the issue of clearances which vary during operation remains.

Various attempts to address the issue are known in the art. Certain approaches have tried to address the issue by matching the material pairing of the rotor and the stator. US 2010/0031671 and US 2012/0045312 propose the application of low thermal expansion materials in the stator.

Mechanical systems described in the art, for instance in US 2002/0009361 and in US 2008/0232949, propose shifting the rotor in an axial direction. This requires, beside the mechanical complexity of such a system, a distinct hade angle of the blades to achieve the targeted clearance alteration and is not applicable for turbine blades having a small or no hade angle.

Other mechanical systems, as e.g. proposed in US 8,534,996, propose a radial movement of stator parts. This however requires the stator to be split into segments in circumferential direction which need to be able to perform relative movement to each other, in turn resulting in additional leaking gaps having a negative impact on the overall performance of the engine.

Other systems are known from the art in which stator parts are cooled or heated to effect thermal contraction or expansion of the stator in order to control clearances. US 2005/0109039 discloses a system applying multiple stators in which one of the stators is thermally activated to be applied for active clearance control.
EP1798381 discloses an inner vane carrier which is activated by a controlled flow. Heat exchange is realized via convection and/or impingement on the outer surface of the stator. This method requires a thin vane carrier casing with low thermal inertia. EP2182175 discloses to support the stationary parts of the engine in the region in which clearance control is to be performed at an outer housing of the engine. The hot gas parts are supported by segmented rings which do not actively contribute to the clearance actuation, but are actuated by the outer housing parts.

US 2006/0225430 discloses a system and method for actively controlling compressor clearances of a gas turbine engine. The inner casing of the gas turbine engine comprises in the region where clearances shall be controlled axial clearance control channels to which a fluid may be selectively supplied, said fluid flowing through the axially oriented channels and selectively cooling or heating the housing around said channels. Thus a thermal expansion or contraction of the housing is achieved. According to this document plenums are arranged at the axial supply and discharge ends of the clearance control channels. The effectiveness of the use of the fluid supplied depends on the heat transfer between the inner walls of the channels and the fluid flowing therethrough.

JP 5 439597 b2 discloses an engine casing element comprising at least one clearance control cavity, which longitudinally extends in the same longitudinal direction as the engine casing element. The clearance control cavity is delimited by an inner wall and has a longitudinal extent. At least one insert member is arranged inside the clearance control cavity. Other examples of known engine casing elements are disclosed in EP 2 180 148 A1, in GB 1 605 255 A, GB 1524 956 A, in CH 707 767 A1 and in EP 1 965 030 A2.

### SUMMARY OF THE INVENTION

It is an object of the present disclosure to provide devices overcoming drawbacks of the art. It is a more specific object of the present disclosure to provide devices improving devices known in the art for active clearance control, and in particular blade and/or vane tip clearance control and control of other radial clearances present in engines and in particular in turboengines. Such may be achieved in improving the heat transfer between a fluid provided for clearance control and the walls of a clearance control cavity to which the control fluid is provided, and may be suited to improve the reaction time for control and on the other hand may serve to reduce the amount of clearance control fluid required. In still a further aspect of the present disclosure the use the clearance control fluid exiting from a clearance control cavity shall be rendered more efficient. Consequently in still a further aspect of the disclosure the overall engine efficiency shall be improved in reducing the amount of clearance control fluid and/or improving the efficiency of clearance control and/or providing a more efficient discharge of the fluid applied for clearance control.

Other aspects of the disclosure, whether explicitly mentioned or not, may become apparent to the skilled person in view of the more detailed description.

The objects of the disclosure are achieved in providing an engine casing element comprising the features of claim 1. Such engine casing element may in this respect be understood as a part of an engine casing, which may for instance comprise a longitudinal extent, a radial extent, and a circumferential extent. Said casing element may, non-limiting, at least essentially resemble or form a cylinder or a truncated cone, or a section of any of the aforementioned. The cross section may be part circular with a circumferential angular extent being less than 360° or less than 180°, and in certain embodiments semi-circular with a circumferential angular extent equaling 180°, or may be circular. The engine casing element may for instance be a part of a turbine casing, a compressor casing, a gas turbine engine casing or a turbocharger casing, and in particular be part of the stationary components of an engine. The engine casing element may for instance be an upper or a lower part of a horizontally split engine housing. The engine casing element may comprise one or more guide vanes or rows of guide vanes, or may comprise means for receiving and/or fixing guide vanes. Likewise the engine casing element may comprise means for attaching heat shields and the like thereto. The casing element may be a vane carrier.

Taking into account that an engine casing element is designed for use in a specific engine and in one or a number of predetermined locations, it will become apparent that the engine casing orientations, or extents, respectively, may have a well-defined correlation with engine orientations. Thus, in certain embodiments, the longitudinal extend of the engine casing element may be at least essentially parallel to an engine or rotor axial direction. Likewise the radial extent may be parallel to a radial direction of an engine or rotor, respectively, and the circumferential extent may be at least essentially identical with a rotor circumferential direction. Thus reference made to said engine or rotor directions in the specification hereinafter may be considered and understood equivalent to a reference to the engine casing element extents or directions. It makes in this respect also perfect sense and provides a well defined teaching to refer to an engine up- and downstream axial orientation.

It shall be noted and will be appreciated that, unlike for circumferentially split casings known in the art cited above for active clearance control, the circumferential segments disclosed herein do not need to perform independent relative movements to each other and may be firmly fixed to each other, avoiding gaps in between, in turn avoiding additional leakage flows which would be detrimental to the overall engine performance.

In some aspects the engine casing element may be part of an engine housing, may in particular be an element of an inner casing or housing, and may further in particular be a vane carrier.

The engine casing element may comprise one single or a multitude of clearance control cavities. A multitude of clearance control cavities may be evenly or unevenly distributed along the engine casing element circumferential direction, and said distribution may depend on a desired spatial heat exchange distribution.

A clearance control cavity longitudinally extends in the same direction as the engine casing element longitudinal extent, and in certain embodiments at least essentially parallel to an engine axial direction. In certain embodiments the at least one clearance control cavity may be a through or blind hole, depending on the accessibility for manufacturing. In this case the clearance control cavity wall delimiting the clearance control cavity within the engine casing element is defined by the hole or bore generated surface. The clearance control cavity may then comprise a constant or staged diameter, and may also comprise a female morse taper or other self-locking female taper in which a male counterpart of the insert may be received.

The insert member arranged within the clearance control cavity may be arranged and configured to effect at least one of a flow guide function and a heat transfer enhancement function. Said function and features proposed to accomplish this function will be lined out in more detail below.

Further, a longitudinal extent of the insert member may be at least essentially aligned with the clearance cavity longitudinal extent.

In another aspect of the disclosure the insert member comprises at least one support section in which the insert member is supported within the clearance control cavity, and wherein in particular said support section is arranged at an insert member longitudinal end. In a further embodiment the insert member comprises at least two support sections, wherein said two support sections may in particular be arranged at two opposite insert member longitudinal ends.

The outer surface of at least one support section may then be snugly received in a corresponding longitudinal section of the clearance control cavity. In particular, a support section, and further in particular one of multiple support sections, may be received in a corresponding section of the clearance control cavity in a tight fit. For instance a support section of the insert member may feature a male cylindrical geometry, while the counterpart section of the clearance control cavity may feature a corresponding female cylindrical geometry. In another embodiment a support section and in particular one support section of multiple support sections, may form a self-locking wedge while a corresponding female wedge may be formed in the clearance control member. Said support section may for instance be a self locking male taper, while a corresponding female taper is provided in the clearance control cavity. In still another embodiment a support section may comprise a male thread, while a corresponding female thread is provided in the clearance control cavity, such that the insert may be screwed into the clearance control cavity. In case multiple support sections are present, embodiments are conceivable wherein only one of the support sections is firmly held inside the clearance control cavity in a locking engagement, while the other one is received in the counterpart female geometry inside the clearance control cavity in a running fit. In particular if the running fit is arranged on a distal side of the insert member, that is, the side which is first inserted when mounting the insert member into the clearance control cavity, this might largely facilitate the assembly. Also, the female mating surface within the clearance control cavity which requires the higher precision of manufacturing will be on a proximal end of the clearance control cavity, and machining said female mating surface may then be found facilitated.

In certain embodiments the corresponding distal mating surfaces may be smaller, e.g. have a smaller diameter, than those on the proximal end of each of the insert member and the clearance control cavity. This may also be found to facilitate assembly.

It is understood that the support sections may serve to plug and seal the clearance control cavity. For instance, in certain embodiments the distal support section may seal a clearance control channel which is provided as a through hole or bore. Also, the support sections may comprise through openings which may provide clearance control fluid supply and/or discharge ports.

Several ways to lock the insert member inside the clearance control cavity are conceivable. Just to name a few:
The insert member may be screwed into the cavity or the engine casing element, whereas a suitable male thread will be provided on the insert and a corresponding female thread will be provided in the clearance control cavity or the engine casing element.

The insert member may be locked by shrinking it into the clearance control cavity or the casing.

The insert member may be caulked with the clearance control cavity or the casing. The insert member may be locked with a locking screw.

The insert member may be provided with a flange which flange is then screwed to the casing.

The insert member may be welded to the channel or the casing.

A press fit may be established between the insert member and/or the casing.

The insert member may be locked by means of a self-locking wedge or taper. Other ways of locking the insert member to the casing, or inside the clearance control cavity, may become readily apparent to the skilled person. According to the present invention the insert member comprises a plate-shaped section, said plate-shaped section comprising a first surface, a second surface, and two lateral surfaces. A first gap is provided between a plate-shaped section first surface and one of a clearance control cavity inner wall and a duct wall inner surface, and a second gap is provided between a plate-shaped section second surface and one of a clearance control inner wall and a duct wall inner surface. A fluid connection is provided between the first gap and the second gap. Said fluid connection is provided by at least one through opening in the plate-shaped section, said openings extending form the first to the second surface. Said at least one through opening is arranged and configured as an impingement hole such that jets of clearance control fluid directed towards the clearance control cavity inner wall are discharged from the through openings. Again, as previously described in different contexts, protrusions and/or recesses or any other suitable turbulence generating means may be arranged on the first or on the second surface of the plate-shaped section, or on both surfaces, in particular to provide turbulence generators in order to enhance heat transfer.

The plate-shaped section of the insert member may assume various geometries and/or arrangements within the clearance control cavity. For instance, the plate-shaped section may feature a constant thickness. In further embodiments, the plate-shaped section thickness may vary along the longitudinal extent of the insert member, which may serve to provide varying gap widths along the longitudinal extent of the clearance control cavity. The plate-shaped section may be arranged inside the clearance control cavity in a centric manner, providing first and second gaps of equal cross-section. The plate-shaped section may also be arranged in an eccentric manner, such that the first and second gaps have different gap widths. The longitudinal extent of the plate-shaped section may be aligned with the longitudinal extent of the clearance control cavity. In other embodiments the plate-shaped section may be arranged obliquely, such that the gap widths of the first and second gap vary in opposite senses along the longitudinal extent of the clearance control cavity with a plate-shaped section of constant thickness being provided.

As is seen from the description above the use of the insert members inside a clearance control cavity may serve to considerably improve the use of the fluid supplied to a clearance control cavity in enhancing the heat transfer between the clearance control cavity inner wall and the fluid, thus reducing the demand for clearance control fluid flow. Furthermore, in choosing insert members featuring different geometries the heat transfer characteristics between the clearance control fluid and the clearance control cavity inner wall may be easily adapted without the need to change the clearance control cavity geometry and without the need of expensive machining of the interior of the clearance control cavity.

In further embodiments of the engine casing element according to the present disclosure the clearance control cavity is provided with at least two fluid ports, wherein a first, clearance control fluid supply, port is in fluid communication with the first gap provided between the insert member plate-shaped section first surface and the clearance control channel inner wall, and a second, clearance control fluid discharge, port is in fluid communication with the second gap provided between the insert plate-shaped section second surface and the clearance control cavity inner wall. In particular embodiments the first and second ports are arranged at a same longitudinal end of the clearance control cavity.

Further disclosed is an engine casing comprising at least one engine casing element as described above. The engine casing may in some aspects of this disclosure be a casing of a turbo engine, such as for instance an expansion turbine, a compressor, a gas turbine engine, or a turbocharger. The engine casing element as described above may beneficially be arranged for instance as a stator element for last compressor stages and/or first turbine stages.

Moreover, an engine is disclosed comprising stationary and moving parts, wherein the stationary parts comprise an engine casing as described above, and comprise in particular an engine casing element according to the present disclosure. The engine may for instance be an expansion turbine, a compressor, in particular a turbo compressor, a gas turbine engine, or a turbocharger.

The disclosure hereinbelow pertains to turbo engines, in particular gas turbine engines and expansion turbines, incorporating an active clearance control system based upon thermal actuation, wherein at least one casing element, or the casing, comprises clearance control cavities comprising fluid supply ports and fluid discharge ports for selectively guiding a flow of a clearance control fluid therethrough during operation. The clearance control cavities may be incorporated in particular in a vane carrier.

At least one discharge port, and in particular all discharge ports, maybe connected to a main working fluid flow channel within the turbo engine. The discharged clearance control fluid may then be used to provide further useful work to the engine, improving the overall engine efficiency.

At least one discharge port, and in particular all discharge ports, may be connected to turbine components requiring cooling, such as e.g. turbine vanes, or stator platforms and heat shields. The discharged clearance control fluid is then further used to cool engine components and thus to save dedicated cooling air, thus improving the overall engine efficiency.

At least one discharge port, and in particular all discharge ports, may be connected to selected stator cavities of an expansion turbine. Thus, the discharged clearance control fluid is used to purge said cavities against hot fluid ingestion from the expansion turbine main flow. This may be found in particular beneficial if purging stator cavities against hot combustion gas ingestion from the hot combustion gas flow in the expansion turbine of an internal combustion gas turbine engine.

In efficiently using the discharged clearance control fluid the overall efficiency of the engine may be enhanced.

The clearance control actuation will be controlled by the temperature and/or mass flow of the clearance control fluid. Said clearance control fluid flow parameters may be controlled on the one hand in an open loop control, based upon engine operation parameters. The operation parameters may comprise the engine load, temperature at the turbine inlet, and moreover the speed of load variations. On the other hand, the clearance control fluid flow parameters may be controlled in a closed loop control, based on measurements of clearances and/or temperatures. For instance, stator temperatures may be measured, and may, alone or in combination with other measured and/or operation data, be used to control the clearance control fluid flow parameters. With a multitude of clearance control cavities distributed over the circumference of the stator it is possible to control the fluid flow to these cavities individually, and the clearances may be controlled and optimized at several circumferential positions, and inhomogeneities may be accounted for.

### BRIEF DESCRIPTION OF THE DRAWINGS

The present invention is now to be explained more closely by means of different embodiments and with reference to the attached drawings. In particular, the figures of the drawings depict:
- Fig. 1: a schematic longitudinal section through an expansion turbine;
- Fig. 2: a schematic cross section of an expansion turbine;
- Fig. 3: a longitudinal section through an expansion turbine comprising an engine casing element as disclosed;
- Fig. 4: a first exemplary embodiment of a clearance control cavity with an insert member according to the invention;
- Fig. 5: a more detailed view of the insert member shown in Fig. 4;
- Fig. 6: an example of a clearance control cavity with an insert member not forming part of the invention;

- Fig. 7: a more detailed view of the insert member shown in Fig. 6;
- Fig. 8: a further example of a clearance control cavity with an insert member not forming part of the invention;

- Fig. 9: an example not forming part of the invention of a clearance control cavity with an insert member, being arranged as an internal sleeve.

The drawings are schematic, and features not required for the understanding of the invention have been omitted. Further, while the embodiments shown in the drawings are possible embodiments of the invention disclosed herein, the invention as disclosed above and claimed in the claims shall not be understood as limited to these.

### DETAILED DESCRIPTION OF DIFFERENT EMBODIMENTS OF THE INVENTION

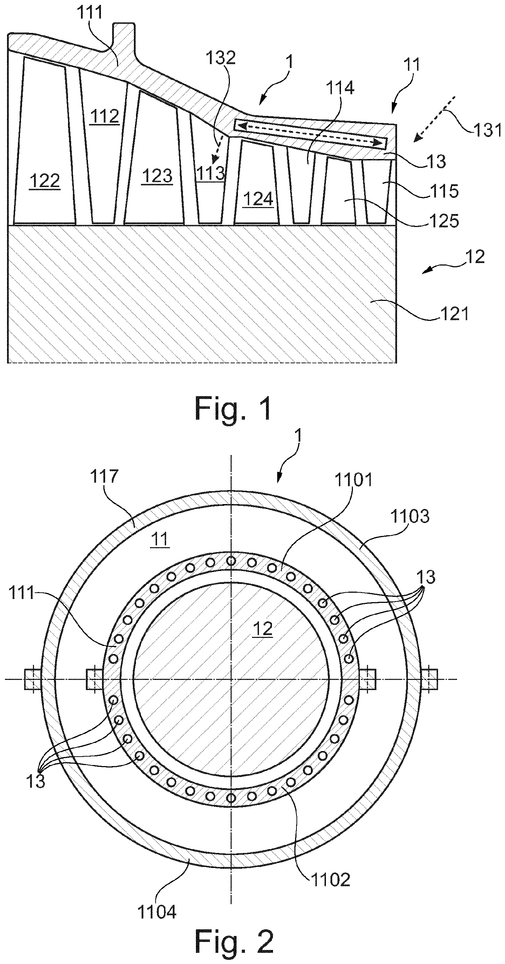

Figure 1 depicts in a schematic representation a longitudinal section through a multistage actual expansion turbine 1. Only one half of the turbine is shown for the ease of depiction. The turbine comprises a stator 11 and the rotor 12. The stator comprises an inner housing 111, an outer housing not shown in this figure, and vanes 112, 113, 114 and 115. Inner housing 111 also serves as a vane carrier to which the turbine guide vanes are attached. The rotor 12 comprises a shaft 121 and blades 122, 123, 124 and 125. As will be appreciated by a person skilled in the art, of working fluid main flow is flowing through the turbine along the blades and vanes from right to left in this illustration. The inner housing 111 comprises the clearance control cavity 13, extending essentially in an axial direction of the turbine. The clearance control cavity 13 is arranged in the region of the first two turbine stages and covers a range where the first and second stage vanes 115 and 114 and the first and second stage blades 125 and 124 are arranged. It will be appreciated that the temperature in the first two turbine stages is higher than in the downstream turbine stages, as the turbine working fluid cools down while it expands in subsequent turbine stages. Schematically shown is the clearance control fluid supply flow 131 and the clearance control fluid discharge flow 132. In this example the supply flow is introduced into the clearance control cavity at an upstream end, related to the direction of turbine working fluid main flow, and is discharged downstream as related to the turbine working fluid main flow into the turbine third stage. The discharged clearance control fluid thus may add useful work to the turbine in the downstream turbine stages. While in this specific example the clearance control fluid flow in the clearance control cavity is shown to flow downstream in the direction of the turbine working fluid main flow, also an upstream configuration may be chosen, with the clearance control fluid flow supply entering the clearance control cavity at the downstream end and is discharged at an upstream end, again said directions related to the turbine working fluid main flow. If the clearance control fluid is discharged into the turbine, the location of introducing the discharged clearance control fluid into the turbine must be chosen such that the pressure of the discharged clearance control fluid is higher than the pressure of the turbine main flow at the entry location.

Reference is now made to figure 2. Figure 2 shows a schematic cross section through turbine 1. Rotor 12 is shown in a very simplified manner, not showing any details about the shaft and the blades. Rotor 12 is contained in stator or casing 11. Casing 11 comprises inner housing 111 and outer housing 117. The casing is horizontally split into an upper half and a lower half, comprising inner housing upper half 1101 and one and outer housing upper half 1103, and inner housing lower half 1102 and outer housing lower half 1104, respectively. The respective upper and lower halves are firmly connected at flanges (without number) by e.g. screw connections. The guide vanes are not shown in this figure. The inner housing, e.g a vane carrier, 111, comprises a number of clearance control cavities or channels 13, only a few of which are denoted by reference numbers, extending axially inside or through an axial section of the inner housing 111, or inside or through casing elements 1101 and 1102 respectively.

Reference is now made again to figure 1. Clearances are required between the tips of blades 122, 123, 124, and 125 and the inner casing 111 in order to enable relative movement between the blade tips and the casing, which might reach a speed of several hundred meters per second. Likewise, tip clearances are needed between the tips of vanes 112, 113, 114 and 115 and the rotor. Said tip clearances change during operation of the engine due to different materials chosen for the rotor and the stator parts, and also due to different temperatures experienced by the rotor and the stator. Moreover, the rotor and the stator have different time responses to temperature changes during transient modes of operation. Thus, tip clearances need to be designed such that they are maintained under any operation conditions. In other words, under most operation conditions the tip clearances are larger than required in order to guarantee safe operation and avoid contact between rotating and stationary parts. On the other hand leakage flows occurring over blade and vane tips through said clearances do not provide useful work to the engine and thus reduce the engine efficiency. The clearance control fluid supply flow 131 is thus provided to the clearance control cavity 13 and guided therethrough. In providing the clearance control fluid flow at a temperature lower than the casing temperature the inner casing 111 will contract and thus reduce tip clearances. In providing the clearance fluid flow at a temperature higher than the casing temperature the inner casing 111 will expand and thus enlarge the tip clearances. The region in the turbine where tip clearance control means are provided may be reduced to the first turbine stages as these will experience the greatest amplitudes of temperature changes. Moreover, as the first turbine stages blades and vanes are the shortest, the relative leakage flow at a given tip clearance will be larger than for the downstream turbine stages.
Likewise, in e.g. a turbo compressor, the application of active clearance control may be restricted to the last most downstream compressor stages.

The expansion and contraction of the casing may be controlled in adjusting the temperature and/or the mass flow of the clearance control fluid. Such control may be based on temperature and load conditions of the engine, but may also be performed in closed loop control based on local temperature and/or clearance measurements in the turbine.

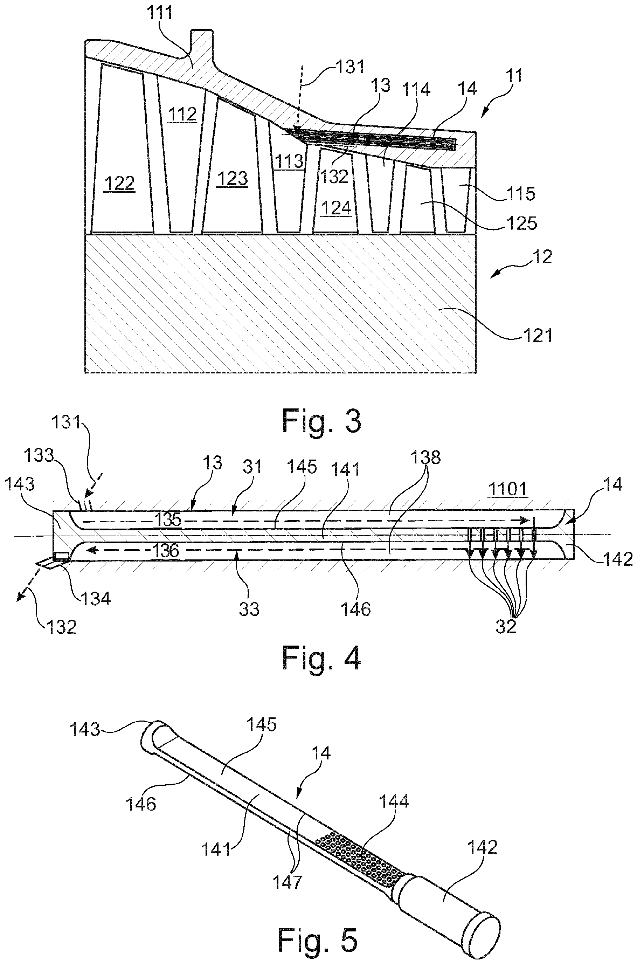

Figure 3 depicts a different embodiment of an expansion turbine in the longitudinal section. The rotor 12 and the stator 11 with their respective components have been lined out in detail in relation with figure 1, and a detailed explanation is thus omitted here. The clearance control cavity is supplied with a clearance control fluid supply flow 131 from the downstream side as related to the flow direction of the turbine main flow. The clearance control cavity 13 comprises an insert member 14 which will be lined out in more detail below. This insert member may, among other functions, be suited to divide the clearance control cavity into two sections such that the control fluid may be guided into independent directions within the clearance control channel. Thus, the clearance control discharge port may be placed on the same longitudinal end of the clearance control cavity as the clearance control supply port. The discharged clearance control fluid 132 is in this embodiment guided to guide vanes 114 and is used for cooling the guide vanes 114 of the second turbine stage. Thus, no or less additional cooling air needs to be supplied to the second turbine stage guide vanes 114, which helps to further improve the engine efficiency and performance.

Reference is now made to figure 4, which depicts an exemplary embodiment of a clearance control cavity 13 comprising an insert member according to the invention. Clearance control cavity 13 is formed in housing or casing element 1101. Clearance control cavity 13 comprises clearance control fluid supply port 133 to which a clearance control fluid supply flow 131 may be provided, and the clearance control fluid discharge port 134 from which a clearance control fluid discharge flow 132 may be discharged. Clearance control cavity 13 is delimited by clearance control cavity inner walls 138. In this exemplary embodiment the clearance control cavity may be assumed, for the purpose of the following explanations, to be a cylindrical bore extending in a longitudinal direction and having a longitudinal extent; however, this shall not be understood to be limiting, other clearance control cavity geometries are possible, and the skilled person will be able to apply the teachings provided hereinafter to other geometries. Moreover, without any further explanations, the meaning of the longitudinal direction and extent of the clearance control cavity is apparent. An insert member 14 is provided within the clearance control cavity 13. Insert member 14 comprises a plate-shaped section 141. It further comprises first and second end sections arranged at longitudinal ends of the insert member 14. The end sections serve as support sections 142, 143 with which the insert member is supported and may be locked inside the cavity 13. The plate shaped section 141 of the insert member divides the interior space of the clearance control cavity 13 into a first gap 135 and a second gap 136. First gap 135 is formed between a plate-shaped member first surface 145 and a clearance control cavity inner wall 138, and second gap 136 is formed between a plate-shaped member second surface 146 and the clearance control cavity inner wall 138. Clearance control fluid supply flow 131 is provided through clearance control fluid supply port 133 to the first gap 135 and flows as a clearance control fluid flow 31 through the gap in the longitudinal direction of the clearance control cavity, or of the insert member 14, respectively. Clearance control fluid flow 31 is guided through suitable means into the second gap 136. A fluid communication between the first and the second gap is provided by impingement holes which will be lined out in more detail below, and flows into second gap 136 in the form of impingement jets 32. Said impingement jets are directed towards the clearance control cavity wall 138 with a high impulse and thus penetrate any eventual thermal boundary layers formed on the clearance cavity inner wall, thus improving the heat transfer. The second gap 136 may in this example be arranged on a radially inner side of the clearance control cavity, that is, the side which is arranged closer to the rotor, or towards the engine axis. This may be the side of the clearance control cavity where the maximum heat intake takes place. The clearance control fluid flow which is discharged from the first gap to the second gap in form of the jets 32 then flows through the second gap in the longitudinal direction of the clearance control cavity, as depicted by reference numeral 33, in a direction opposite to that of the clearance control fluid flow 31 in the first gap 135, and is discharged through clearance control fluid discharge port 134 as a clearance control fluid discharge flow 132. As is seen, end and support sections 142 and 143 of the insert member plug longitudinal ends of the clearance control cavity such that no or essentially no clearance control fluid may pass between the end sections and the clearance control cavity inner wall. However, in this exemplary embodiment the clearance control fluid discharge port 134 is formed in end and support section 143. As will be appreciated, while the clearance control fluid flows 31 and 33 flow through the gaps, heat exchange takes place between the clearance control fluid and the clearance control cavity inner wall 138. Depending on the temperature of the clearance control fluid as compared to the temperature of the casing 111 the casing may be cooled or heated. Thus, in controlling the temperature and/or mass flow of the clearance control fluid the casing 111 may be controllably cooled or heated, which in turn will effect a thermal expansion or contraction of the casing 111 which is used to control the tip clearances as lined out above.

Figure 5 depicts the insert member 14 as shown in figure 4 in more detail. Insert member 14 as depicted in figure 5 comprises end sections 142 and 143 and a plate-shaped section 141 arranged between the end sections and extending between the end sections in the longitudinal direction. The plate shaped section 141 comprises a first surface 145 and the second surface 146, as well as two lateral surfaces 147. The width of the plate-shaped section may, in particular in the embodiment as shown in figure 4, be such that the lateral surfaces are essentially flush with the clearance control cavity inner walls and thus provide an at least essentially tight sealing between the first and the second gap. Thus, the control fluid flow from the first to the second gap entirely flows through the impingement holes 144 which are lined out in more detail below. Other embodiments are conceivable in which a lateral gap may be formed between the plate shaped section lateral surfaces and the clearance control cavity inner wall such that clearance control fluid may be discharged between a lateral surface and the clearance control cavity inner wall from the first gap to the second gap. To that extent the width of the plate-shaped section may also vary along the longitudinal extent of the insert member such that the width of the lateral gap varies along the longitudinal extent of the clearance control cavity, or the insert member, respectively. The insert member 14 depicted in figure 5 further comprises an array of impingement holes 144, extending from the plate-shaped section first surface 145 to the plate-shaped section second surface 146, and being arranged and configured to provide impingement jets when fluid flows through them, as shown in figure 4. The distribution of the impingement holes on the plate-shaped section may be chosen differently than shown in this exemplary embodiment, depending on the heat transfer characteristics to be achieved within the clearance control cavity. Further, the support sections 142 and 143 of the insert member 14 have a male cylindrical shape to fit into a female cylindrical section of the clearance control cavity. In this exemplary embodiment the support section 143 may be a distal end section which will, during assembly, be inserted first into the clearance control cavity, and may be sized such that a running fit between the end section outer surface and the clearance control cavity inner wall is achieved. Proximal end section 142 may be sized to achieve a locking fit with a corresponding longitudinal section of the clearance control cavity inner wall. It may also be shaped as a male locking taper, wherein a corresponding longitudinal section of the clearance control cavity may be shaped as a corresponding female locking taper. In arranging the locking feature of the insert member 14 on the proximal end, that is the part of the insert member which is lastly inserted into the clearance control cavity during assembly, mounting the insert member 14 in the clearance control cavity is largely facilitated.

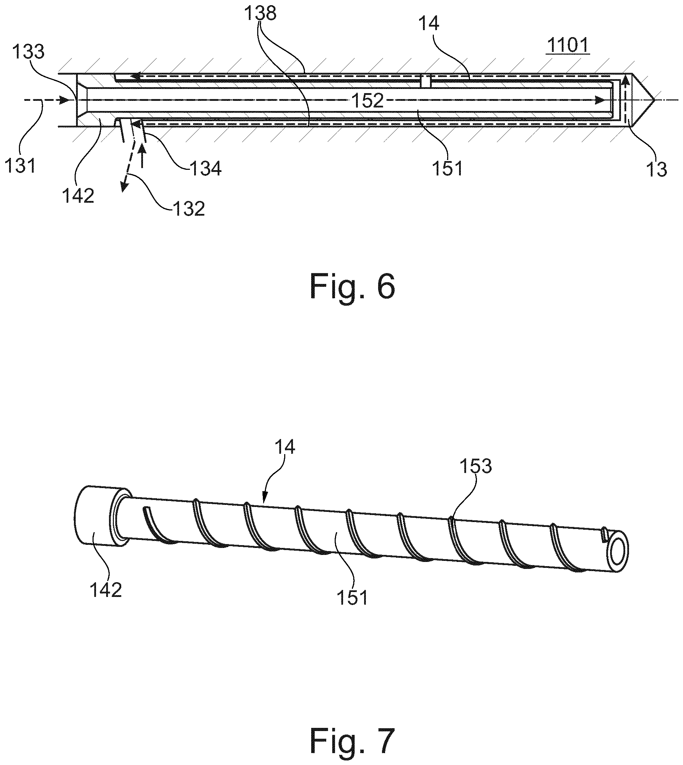

Again with reference to figure 4 it is noted that in this exemplary embodiment the plate-shaped section 141 has a constant thickness and is arranged in a symmetric manner and parallel to the clearance control cavity longitudinal extent. This results in constant widths of first and second gap 135 and 136 along the longitudinal extent of the clearance control cavity, and an identical width of said gaps. However, the plate shaped-section may be arranged in an asymmetric manner, may extend obliquely to the clearance control cavity longitudinal extent, and/or may feature a variable thickness, whereby the first and second gaps 135 and 136 may vary from each other and/or may feature a variable gap width along the longitudinal extent of the clearance control cavity 13. An example not forming part of the invention of a clearance control cavity comprising an insert member is shown in figure 6. The clearance control cavity 13 in this case is produced as a blind hole in the casing element 1101. Insert member 14 comprises a duct 152 delimited by a duct wall section 151, which resembles for instance a tube. A clearance control fluid supply port 133 is formed at one longitudinal end of the insert member 14 and is fluidly connected with the duct 152. Clearance control fluid supply flow 131 is supplied to the supply port, is guided into the duct 152, and is discharged from the duct at a second longitudinal end of the insert member, or the duct, respectively. The clearance control supply fluid then flows through an annular gap provided between the duct wall outer surface and the clearance control cavity inner walls 138 in a heat exchange relationship with the clearance control cavity inner walls, and is thereafter discharged through clearance control fluid discharge port 134 as a clearance control fluid discharge flow 132. As will be lined out in connection with figure 7, an outer wall of the duct comprises turbulence generating features which enhance and/or generate turbulence in the clearance control fluid flow through the annular gap, which in turn enhances the heat transfer between the clearance control cavity walls and the clearance control fluid flow within said gap. Further, the insert member is provided with a cylindrical support section 142, which might serve to support and lock the insert member 14 within the clearance control cavity in a manner as lined out above.

An example not forming part of the invention of an insert member comprising a duct is depicted in more detail in figure 7. The insert comprises the support section 142 and a duct wall 151. A helical flow guide element 153 extends along the longitudinal extent of the duct wall outer surface. The flow guide element might be designed such that it essentially extends over the entire cross-section of the gap formed between the duct wall outer surface and the clearance control cavity inner walls. A helical flow of the clearance control fluid in the gap would consequently be induced. In another embodiment, such as disclosed in connection with figure 6, the flow guide element would radially extend only over a part of the gap and would serve to generate and/or enhance turbulence of the flow inside the gap in order to enhance heat transfer between the clearance control cavity inner walls and the clearance control fluid. Also, other turbulence generating elements may be arranged on the duct wall outer surface.

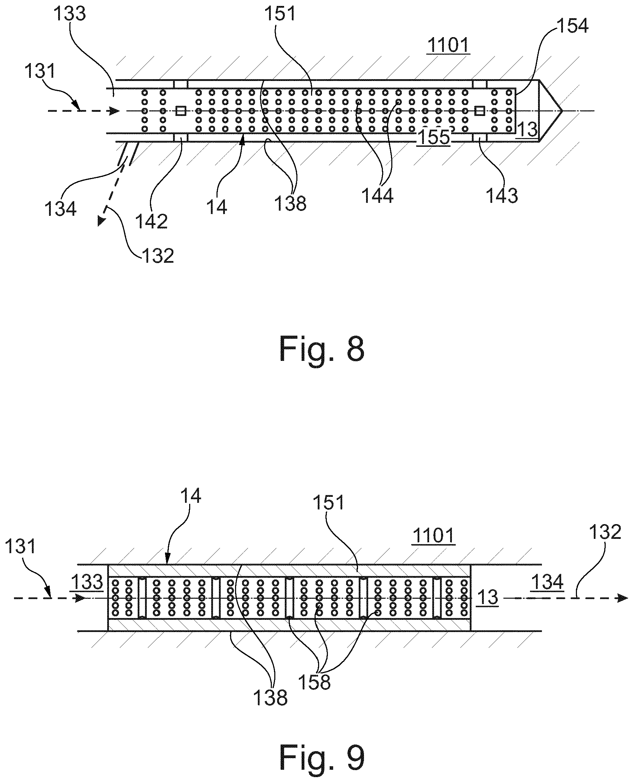

In the example not forming part of the invention shown in figure 8 an insert member 14 comprising and essentially consisting of a duct wall 151 is arranged within the clearance control cavity. A number of radially protruding struts form the support sections 142 and 143. The duct section of the insert member 14 forms a gap 155, in this embodiment essentially an annular gap, between an outer surface of the duct wall and the clearance control cavity inner wall. While a first front end of the duct is open to provide access for a clearance control cavity fluid flow 131 to be supplied to the duct, a second front end 154 of the duct is closed. The duct wall 151 is perforated by a number of impingement holes 144. A clearance control fluid supply flow 131 is provided through clearance control fluid supply port 133 to the duct 151 and is discharged from the duct through the impingement holes 144 as jets directed towards the clearance control cavity inner walls. The clearance control fluid then flows towards the clearance control fluid discharge port 134 and is discharged from the clearance control cavity as a clearance control fluid discharge flow 132.

While in this example the impingement holes 144 are shown as being essentially equally distributed on the duct wall 151, the impingement holes may be differently distributed along the circumferential and longitudinal extent of the duct wall. However, such distribution of the impingement holes will be subject to a detailed consideration of the required heat transfer.

Figure 9 depicts yet another example not forming part of the invention. The insert 14 comprises a duct being delimited by a duct wall 151 which is arranged inside the clearance control cavity essentially without having any gap between the duct wall outer surface and the clearance control cavity inner wall. For instance, it may be shrunk into the clearance control cavity. The duct comprises a number of turbulence generators 158 provided on an inner surface of the duct wall, for instance provided in the form of annular elevations or of protrusions or dimples. These turbulence generators serve to enhance turbulence in a flow of clearance control fluid flowing through the duct. Due to the insert member being shrunk into the clearance control cavity, there is a good heat conduction between the duct wall outer surface and the clearance control cavity inner wall. By this measure turbulence generators may be provided within the clearance control cavity 13, and the heat transfer between the clearance control fluid flowing through the clearance control cavity and the casing may be enhanced without the need to further machine the clearance control cavity inner walls.

While the invention has been described in the context of an expansion turbine and with the help of selected exemplary embodiments, these exemplary embodiments and the context of an expansion turbine shall in no way be limiting for the disclosure of this document or the scope of the claims.

### LIST OF REFERENCE NUMERALS

- 1: expansion turbine
- 11: stator, casing
- 12: rotor
- 13: clearance control cavity
- 14: insert member
- 31: clearance control fluid flow
- 33: clearance control fluid flow
- 111: inner housing or casing
- 112, 113, 114, 115: vanes
- 117: outer housing or casing
- 121: shaft
- 122, 123, 124, 125: blades
- 131: clearance control fluid supply flow
- 132: clearance control fluid discharge flow
- 133: clearance control fluid supply port
- 134: clearance control fluid discharge port
- 135, 136: gaps
- 138: clearance control cavity inner wall
- 141: plate-shaped section of insert member
- 142, 143: support sections of insert member
- 144: impingement holes
- 145: first surface of plate-shaped section
- 146: second surface of plate-shaped section
- 147: lateral surfaces of plate-shaped section
- 151: duct wall, duct-like section
- 152: duct
- 153: flow guide element
- 154: duct front end
- 155: gap
- 158: turbulence generators
- 1101: inner housing or casing upper half, engine casing element
- 1102: inner housing or casing lower half
- 1103: outer housing or casing upper half
- 1104: outer housing or casing lower half

## Claims

1. An engine casing element (1101), the engine casing element comprising at least one clearance control cavity (13), the clearance control cavity longitudinally extending in the same direction as the engine casing element longitudinal extent and being delimited by a clearance control cavity inner wall (138) and having a clearance control cavity longitudinal extent, at least one insert member (14) being arranged inside the clearance control cavity;
**characterized in that** the insert (14) comprises a plate-shaped section, said plate-shaped section comprising a first surface (145), a second surface (146), and two lateral surfaces (147),
a first gap (135) formed between the plate-shaped section first surface (145) and the clearance control cavity inner wall (138); a second gap (136) formed between the plate-shaped section second surface (146) and the clearance control cavity inner wall (138); wherein a fluid connection is provided between the first gap (135) and the second gap (136) consisting of (138), at least one through opening (144) which extends from the plate-shaped section first surface (145) to the plate shaped section second surface (146), and wherein further said at least one through opening is arranged and configured as an impingement hole.

2. The engine casing element according to claim 1, **characterized in that** the insert member (14) divides the clearance control cavity (13) into two sections such that the control fluid may be guided into independent directions.

3. The engine casing element according to any of the preceding claims, **characterized in that** an insert member longitudinal extent is at least essentially aligned with the clearance control cavity longitudinal extent.

4. The engine casing element according to any of the preceding claims, **characterized in that** the insert member (14) comprises at least one support section (142, 143) in which the insert member is supported within the clearance control cavity, and wherein said support section is arranged at an insert member longitudinal end.

5. The engine casing element according to the preceding claim, **characterized in that** the insert member (14) comprises at least two support sections (142, 143), wherein said two support sections are arranged at two opposite insert member longitudinal ends.

6. The engine casing element according to any of the preceding claims, **characterized in that** at least one of the plate-shaped section first (145) and second (146) surfaces is provided with at least one of a protrusion and a recess, said at least one protrusion and/or recess providing a non-uniform gap width over an extent of the respective gap (135, 136) and suited to generate and/or enhance turbulence in a flow through said gap.

7. The engine casing element according to any of the preceding claims, the clearance control cavity (13) being provided with at least two fluid ports (133, 134), where a first fluid port (133) is in fluid communication with the first gap (135) provided between the insert plate-shaped section first surface (145) and the clearance control cavity inner wall (138), and a second fluid port (134) is in fluid communication with the second gap (136) provided between the insert plate-shaped section second surface (146) and the clearance control cavity inner wall, and wherein the first and second ports are arranged at a same longitudinal end of the clearance control cavity.

## Patentansprüche

1. Triebwerkgehäuseelement (1101), umfassend mindestens eine Kavität zur Spaltkontrolle (13), die sich in Längsrichtung in derselben Richtung erstreckt wie die Längsausdehnung des Triebwerkgehäuseelements und von einer Innenwand (138) der Kavität zur Spaltkontrolle begrenzt wird und eine Längsausdehnung aufweist,
mindestens ein im Innern der Kavität zur Spaltkontrolle angeordnetes Einsatzteil (14);
**dadurch gekennzeichnet, dass** das Einsatzteil (14) einen plattenförmigen Abschnitt umfasst, der eine erste Fläche (145), eine zweite Fläche (146) und zwei Seitenflächen (147) aufweist,
einen zwischen der ersten Fläche (145) des plattenförmigen Abschnitts und der Innenwand (138) der Kavität zur Spaltkontrolle ausgebildeten ersten Spalt (135);
einen zwischen der zweiten Fläche (146) des plattenförmigen Abschnitts und der Innenwand (138) der Kavität zur Spaltkontrolle ausgebildeten zweiten Spalt (136);
wobei zwischen dem ersten Spalt (135) und dem zweiten Spalt (136) eine Fluidverbindung vorgesehen ist, bestehend aus
mindestens einer Durchgangsöffnung (144), die sich von der ersten Fläche (145) des plattenförmigen Abschnitts zur zweiten Fläche (146) des plattenförmigen Abschnitts erstreckt, wobei die mindestens eine Durchgangsöffnung als eine Aufprallöffnung ausgebildet ist.

2. Triebwerkgehäuseelement nach Anspruch 1, **dadurch gekennzeichnet, dass** das Einsatzteil (14) die Kavität zur Spaltkontrolle (13) in zwei Abschnitte unterteilt, so dass das Steuerungsfluid in unabhängige Richtungen geleitet werden kann.

3. Triebwerkgehäuseelement nach einem der vorstehenden Ansprüche, **dadurch gekennzeichnet, dass** eine Längsausdehnung des Einsatzteils im Wesentlichen der Längsausdehnung der Kavität zur Spaltkontrolle entspricht.

4. Triebwerkgehäuseelement nach einem der vorstehenden Ansprüche, **dadurch gekennzeichnet, dass** das Einsatzteil (14) mindestens einen Stützabschnitt (142, 143) aufweist, in dem das Einsatzteil im Innern der Kavität zur Spaltkontrolle abgestützt wird, wobei der Stützabschnitt an einem Längsende des Einsatzteils angeordnet ist.

5. Triebwerkgehäuseelement nach dem vorstehenden Anspruch, **dadurch gekennzeichnet, dass** das Einsatzteil (14) mindestens zwei Stützabschnitte (142, 143) aufweist, wobei die zwei Stützabschnitte an zwei gegenüberliegenden Längsenden des Einsatzteils angeordnet sind.

6. Triebwerkgehäuseelement nach einem der vorstehenden Ansprüche, **dadurch gekennzeichnet, dass** mindestens die erste Fläche (145) des plattenförmigen Abschnitts oder die zweite Fläche (146) des plattenförmigen Abschnitts mindestens einen Vorsprung oder eine Ausnehmung aufweisen, wobei der mindestens eine Vorsprung und/oder die Ausnehmung eine uneinheitliche Spaltbreite über eine Ausdehnung des entsprechenden Spalts (135, 136) bewirken und geeignet sind, eine Turbulenz in einer Strömung durch den Spalt zu erzeugen oder zu erhöhen.

7. Triebwerkgehäuseelement nach einem der vorstehenden Ansprüche, wobei die Kavität zur Spaltkontrolle (13) mindestens zwei Fluidanschlüsse (133, 134) aufweist, wobei ein erster Fluidanschluss (133) in Fluidverbindung mit dem zwischen der ersten Fläche (145) des plattenförmigen Abschnitts des Einsatzteils und der Innenwand (138) der Kavität zur Spaltkontrolle angeordneten ersten Spalt (135) steht und ein zweiter Fluidanschluss (134) in Fluidverbindung mit dem zwischen der zweiten Fläche (146) des plattenförmigen Abschnitts des Einsatzteils und der Innenwand der Kavität zur Spaltkontrolle angeordneten zweiten Spalt (136) steht, wobei der erste und der zweite Anschluss an demselben Längsende der Kavität zur Spaltkontrolle angeordnet sind.

## Revendications

1. Élément de carter de moteur (1101), l'élément de carter de moteur comprenant au moins une cavité de contrôle de dégagement (13), la cavité de contrôle de dégagement s'étendant longitudinalement dans la même direction que celle dans laquelle l'élément de carter de moteur s'étend longitudinalement et étant délimitée par une paroi interne de cavité de contrôle de dégagement (138) et ayant une étendue longitudinale de cavité de contrôle de dégagement, au moins un élément d'insert (14) disposé à l'intérieur de la cavité de contrôle de dégagement ;
**caractérisé en ce que** l'insert (14) comprend une section en forme de plaque, ladite section en forme de plaque comprenant une première surface (145), une seconde surface (146), et deux surfaces latérales (147),
un premier espace (135) formé entre la première surface de la section en forme de plaque (145) et la paroi interne de cavité de contrôle de dégagement (138) ;
un second espace (136) formé entre la seconde surface de la section en forme de plaque (146) et la paroi interne de cavité de contrôle de dégagement (138) ;
dans lequel une liaison fluidique est prévue entre le premier espace (135) et le second espace (136), et est composée d'au moins une ouverture traversante (144) qui s'étend entre la première surface de la section en forme de plaque (145) et la seconde surface de la section en forme de plaque (146),
et dans lequel, en outre, ladite au moins une ouverture traversante est prévue et configurée comme un orifice de collision.

2. Élément de carter de moteur selon la revendication 1, **caractérisé en ce que** l'élément d'insert (14) divise la cavité de contrôle de dégagement (13) en deux sections de sorte que le fluide de contrôle puisse être guidé dans des directions indépendantes.

3. Élément de carter de moteur selon l'une quelconque des revendications précédentes, caractérisé en ce l'étendue longitudinale d'un élément d'insert est au moins essentiellement alignée avec l'étendue longitudinale de la cavité de contrôle de dégagement.

4. Élément de carter de moteur selon l'une quelconque des revendications précédentes, **caractérisé en ce que** l'élément d'insert (14) comprend au moins une section de support (142, 143) dans laquelle l'élément d'insert est supporté dans la cavité de contrôle de dégagement, et dans lequel ladite section de support est prévue au niveau d'une extrémité longitudinale de l'élément d'insert.

5. Élément de carter de moteur selon la revendication précédente, **caractérisé en ce que** l'élément d'insert (14) comprend au moins deux sections de support (142, 143), dans lequel lesdites deux sections de support sont prévues au niveau de deux extrémités longitudinales opposées de l'élément d'insert.

6. Élément de carter de moteur selon l'une quelconque des revendications précédentes, **caractérisé en ce qu'**au moins l'une de la première (145) et de la seconde (146) surfaces de la section en forme de plaque est munie d'au moins l'un d'une saillie et d'un renfoncement, ladite au moins une saillie et/ou ledit au moins un renfoncement assurant une largeur d'espace non uniforme sur une étendue de l'espace respectif (135, 136) et étant adapté(e) pour générer et/ou améliorer la turbulence d'un écoulement dans ledit espace.

7. Élément de carter de moteur selon l'une quelconque des revendications précédentes, la cavité de contrôle de dégagement (13) étant munie d'au moins deux orifices de fluide (133, 134), dans lequel un premier orifice de fluide (133) est en communication fluidique avec le premier espace (135) prévu entre la première surface de la section en forme de plaque de l'insert (145) et la paroi interne de la cavité de contrôle de dégagement (138), et un second orifice de fluide (134) est en communication fluidique avec le second espace (136) prévu entre la seconde surface de la section en forme de plaque de l'insert (146) et la paroi interne de la cavité de contrôle de dégagement, et dans lequel le premier et le second orifices sont prévus au niveau d'une même extrémité longitudinale de la cavité de contrôle de dégagement.
